# EUROPÄISCHE PATENTANMELDUNG

(11) **EP 1 521 379 A1**
(43) Veröffentlichungstag der Anmeldung: **06.04.2005**
(21) Anmeldenummer: 04023408.0
(22) Anmeldetag: 01.10.2004
(51) Int. Cl.: H04B 1/40, H04B 1/52

(54) **Sende- und/oder Empfangseinrichtung**

(30) Priorität: 02.10.2003 DE 10345971
(71) Anmelder: SIEMENS AKTIENGESELLSCHAFT, 80333 München (DE)
(72) Erfinder: Munoz, Carlos Civeira, 42105 Wuppertal (DE); Gao, Yingije, Dr., 47441 Moers (DE)

(57) **Zusammenfassung**

Die Erfindung betrifft eine Sende- und/oder Empfangseinrichtung, wie sie vorzugsweise bei einem Kommunikationsendgerät im Bereich des Mobilfunks eingesetzt wird. Ferner betrifft die vorliegende Erfindung ein mit einer solchen Schaltungsanordnung ausgestattetes Kommunikationsendgerät.

Um eine Vorrichtung der eingangs genannten Art dahingehend zu verbessern, dass ihr Schaltungsaufwand verringert wird, wird vorgeschlagen, dass in der Antennenanordnung (3) getrennte Antennen (36, 38) für das Senden und das Empfangen vorgesehen sind, wobei ein Teil der gesamten Anforderungen an Filterung und Isolation als Designvorgabe und Anforderung auf die Antennen (36, 38) des Antennenteils (3) verlagert ist, und die Anforderungen an die nachfolgenden Signalverarbeitungspfade (6, 8) und deren Komponenten gesenkt sind.

## Beschreibung

Die Erfindung betrifft eine Sende- und/oder Empfangseinrichtung, wie sie vorzugsweise bei einem Kommunikationsendgerät im Bereich des Mobilfunks eingesetzt wird. Eine derartige Sende- und Empfangseinrichtung umfasst eine Schaltungsanordnung zur Verbindung einer Antennenanordnung mit einer Verstärkeranordnung mit einem Empfangspfad, der eine Empfangsfiltereinrichtung zum Selektieren von Empfangssignalen aufweist, und einem Sendepfad, der eine Sendefiltereinrichtung zur Dämpfung von ungewollten Sendesignalen aufweist, die jeweils mit der Antennenanordnung über eine Leitung verbunden sind. Ferner betrifft die vorliegende Erfindung ein mit einer solchen Schaltungsanordnung ausgestattetes Kommunikationsendgerät.

Mit der in immer kürzeren Zyklen fortschreitenden Entwicklung der mobilen Funkkommunikationstechnologien, werden zunehmend auch immer mehr Funkkommunikationsstandards von zum Teil unterschiedlichen Organisationen definiert. Diese Standards unterscheiden sich häufig neben einer anderen Datenorganisation innerhalb der Datenströme unter anderem auch dadurch, dass sie sich unterschiedlicher Frequenzbänder bedienen. Um eine möglichst weltumspannende Kommunikation zu ermöglichen, wird ein hierfür ausgestaltetes Funkkommunikationsendgerät eine der Anzahl der Frequenzbänder entsprechende Anzahl von separaten Funksende/Funkempfangspfaden, den sog. RF-paths, diskutiert. Ein derartiges Gerät wird im Allgemeinen als Multimode Mobilteil bezeichnet.

An Sende- und Empfangseinrichtungen zukünftiger mobiler Kommunikationsendgeräte werden daher sehr unterschiedliche Anforderungen gestellt werden. Es müssen gleichzeitig verschiedene Kommunikationsstandards unterstützt werden, wie z.B. GSM Receiver und UMTS Transceiver oder gar WLAN nach IEEE 802.11, so dass ein derartiges Gerät Multimode/Multi-Link- Eigenschaften aufweisen muss. Zudem ist eine hohe spektrale Effizienz notwendig, die eine Ausnutzung der räumlichen Diversität durch mehrere Antennen erforderlich macht. Zudem wird eine hohe Flexibilität in Bezug auf die Datenrate gefordert.

Allgemein wird bei Kommunikationssystemen zwischen Vollduplex- und Nicht-Vollduplex-Systemen unterschieden. Beispiele für Vollduplex-Systeme, die sich durch ein gleichzeitiges Senden und Empfangen von Signalen auszeichnen, sind IS95, CDMA2000 und UMTS UTRA FDD. Bei Nicht-Vollduplex-Systemen ist ein gleichzeitiges Senden und Empfangen nicht vorgesehen. Beispiele hierfür sind UMTS UTRA TDD, GSM und DECT.

Für Multi-Mode geeignete Kommunikationsendgeräte sollen verschiedene Frequenzbänder benutzen können, wobei sowohl Vollduplex-Systeme als auch Nicht-Vollduplex-Systeme zur Anwendung kommen können. Bei beiden Arten von Kommunikationssystemen ist der Tatsache Rechnung zu tragen, dass eine gute Entkopplung von Sende- und Empfangspfad zu bewerkstelligen ist. Dies geschieht in erster Linie mit Hilfe einer Sende-Filter-Einrichtung, die vermeidet, dass auszusendende Signale oder Rauschen Störungen verursachen, die den Empfangspfad betreffen.

Hinsichtlich der Entkopplung von Sende- und Empfangspfad liegen bei Vollduplex- und Nicht-Vollduplex-Systemen unterschiedliche Anforderungen vor. Um nicht erwünschte Frequenzanteile eines Sendesignals, die außerhalb des eigentlichen Sendebandes liegen, zu unterdrücken und nicht über die Antenne abzustrahlen, benötigen Nicht-Vollduplex-Systeme einen Tiefpass, wohingegen Vollduplex-Systeme einen Bandpass vorsehen. Der Tiefpass für den Sendezweig bei einem Nicht-Vollduplex-System dient der Unterdrückung harmonischer Oberwellen eines Sendesignals. In diesem Zusammenhang weist der Empfangspfad des Nicht-Vollduplex-Systems ein Bandpassfilter für eine Blockerunterdrückung auf.

Bei dem Vollduplex-System sind an die Sendefiltereinrichtung vergleichsweise höhere Anforderungen zu stellen, und zwar bezüglich der außer Banddämpfungen, als bei einem Nicht-Vollduplex-System, insbesondere dessen Tiefpassfilter. Der Grund dafür besteht darin, dass bei einem gleichzeitigen Senden und Empfangen auch Interferenzen zu unterdrücken sind. Solche Interferenzen können sich zwischen Sendesignalen und gleichzeitig empfangenen Empfangssignalen ergeben.

Um einen Multi-Mode-Betrieb bei Kommunikationsendgeräten zu ermöglichen, wird bisher so vorgegangen, dass für jedes Frequenzband ein Pfad mit zugehörigem Sendefilter und Verstärker zur Verfügung gestellt werden. Nicht-Vollduplex-Pfade und Vollduplex-Pfade werden außerdem getrennt. Dies bedeutet einen enormen Aufwand an Hardware um Multi-Mode-Schaltungsanordnungen der eingangs genannten Art zu realisieren. Aus der EP 1 175 018 A1 ist eine Anordnung bekannt, bei der für solche Sende-/Empfangspfade jeweils Schmalbandkomponenten, wie beispielsweise Verstärker oder frequenzfeste bzw. "Fixed Filter", benötigt werden. Nachteilig hierbei ist, dass diese Anordnungen zu deutlichen Einbußen in der Funktionsleistung bzw. Performance sowie aufgrund des Raumbedarfs derartiger Schaltungen einem erhöhten Formfaktor der betreffenden Funkkommunikationsendgeräte führt.

Eine wenigstens teilweise Minderung des Schaltungsaufwandes wäre durch eine Verwendung abstimmbarer Filter und Filterbänke möglich. Hier ist jedoch prinzipiell von Nachteil, dass ein abstimmbares Filter hinsichtlich der Performance in der praktischen Ausführung schlechter als ein Filter ist, das fest auf einen Frequenzbereich eingestellt ist. Hohe Verluste durch erhöhte Einfügedämpfungen steigern ihrerseits den Energiebedarf einer Vorrichtung und senken damit eine Batterie- oder Akkumulator-Standzeit.

Es ist Aufgabe der vorliegenden Erfindung, eine Vorrichtung der eingangs genannten Art dahingehend zu verbessern, dass ihr Schaltungsaufwand verringert wird.

Diese Aufgabe wird durch eine Sende- und/oder Empfangseinrichtung gemäß Patentanspruch 1 und durch ein Kommunikationsendgerät gemäß Patentanspruch 6 gelöst.

Erfindungsgemäß weist eine Sende- und/oder Empfangseinrichtung getrennte Antennen für das Senden und das Empfangen auf, wobei ein Teil der gesamten Anforderungen an Filterung und Isolation als Designvorgabe und Anforderung auf diese Antennen verlagert ist. Durch die Trennung von Sendeund Empfangsantenne wird die Tx/Rx-Isolation zudem wesentlich erhöht. Durch die gezielte Nutzung von Filtereigenschaften der Antennen über deren jeweilige spektrale Sende- und Empfangscharakteristik können die Anforderungen an die nachfolgenden Signalverarbeitungspfade gesenkt werden. Um eine möglichst umfassende und lückenlose Benutzung künftiger Multimedia Anwendungen zu erlauben, ist eine erfindungsgemäße Sende- und/oder Empfangseinrichtung damit in der Lage, bei geminderten Anforderungen insbesondere an die Filter mehrere Standards und damit auch mehrere Funkbänder empfangen bzw. senden zu können.

Die weiteren abhängigen Ansprüche enthalten jeweils ebenfalls besonders vorteilhafte Ausgestaltungen und Weiterbildungen der Erfindung. So wird bei einem bevorzugten Ausführungsbeispiel ein Antennenteil hinsichtlich seiner Charakteristik unter Berücksichtigung der zu unterstützenden Standards entworfen. Damit kann ein Teil der in den Sendeund Empfangspfaden insgesamt vorzusehenden Filterung noch gezielter auf die Antennen verlagert werden.

Im Wesentlichen auf diesem besonderen Merkmal aufbauend werden in einer Weiterbildung der Erfindung für die Filter durchstimmbare Elemente verwendet, die nun hinsichtlich ihrer Performance geminderten Anforderungen genügen müssen. Dies hat den Vorteil, dass nun eine Bündelung hinsichtlich ihrer Frequenzbänder quasi benachbarter Standards in einem Signalverarbeitungspfad ermöglicht wird. Weiterhin ergibt sich aus der gesenkten Performance der Vorteil, dass eine jeweilige Einfügedämpfung der Bauelemente geringer ausfällt.

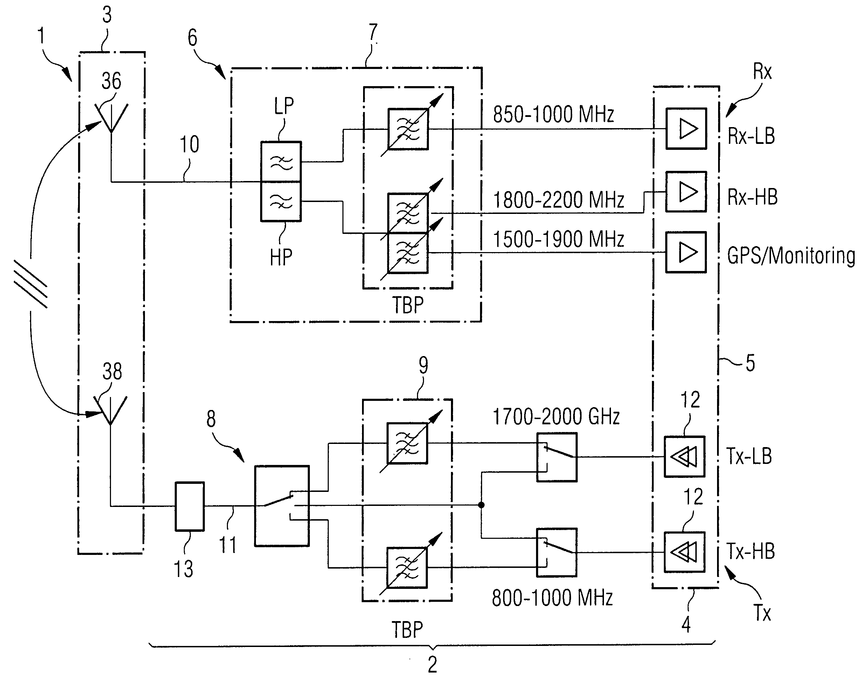

Die Erfindung wird im Folgenden unter Hinweis auf die beigefügte Zeichnung anhand eines Ausführungsbeispiels näher erläutert. Die verwendete Nomenklatur wurde, wie bereits in der Beschreibungseinleitung geschehen, an die eines Fachmanns aus diesem Bereich angeglichen, so dass auf eine Übersetzung von geläufigen Fachwörtern englischen Ursprungs in das Deutsche verzichtet wurde. Die einzige Figur zeigt eine Blockdarstellung einer erfindungsgemäßen Sende- und/oder Empfangseinrichtung 1. Sie stellt eine mögliche Transceiver-Architektur dar, die zelluläre und cordless Standards abdeckt, wie z.B. GSM/EDGE 850, 900, 1800, 1900; UMTS, IS95, CDMA2000, DECT, u.ä. Standards.

Die Sende- und/oder Empfangseinrichtung 1 umfasst eine Schaltungsanordnung 2 zur Verbindung einer Antennenanordnung 3 mit einer Verstärkeranordnung 4 und einer nachfolgenden Signalverarbeitung und/oder Signalaufbereitung.

Die Signalverarbeitung und/oder Signalaufbereitung schließt sich an eine Signaleingangs- und/oder Signalausgangsschnittstelle 5 an und ist nicht weiter dargestellt, da hier eine bekannte Vorrichtung verwendet werden kann. An der mit RX gekennzeichneten Empfängerseite werden mit einem niedrigen Frequenzband RX-LB und einem hohen Frequenzband RX-HB sowie einem Global-Positioning-Signal bzw. GPS- und/oder Monitoring-Ausgang verschiedenste Signale übergeben. Auf der mit TX gekennzeichneten Senderseite werden mit einem niedrigen Frequenzband TX-LB und einem hohen Frequenzband TX-HB zwei Signale von außen zugeführt.

Die Schaltungsanordnung 2 umfasst einen Empfangspfad 6, der eine Empfangsfiltereinrichtung 7 zum Selektieren von Empfangssignalen aufweist, und einem Sendepfad 8, der eine Sendefiltereinrichtung 9 zur Dämpfung von Sendesignalen aufweist. Der Empfangspfad 6 und der Sendepfad 8 sind jeweils über getrennte Leitungen 10, 11 mit der Antennenanordnung 3 verbunden. In der Antennenanordnung 3 selber sind für den Empfangspfad 6 und den Sendepfad 8 also getrennte Antennen 36, 38 jeweils für das Senden und das Empfangen von Signalen vorgesehen.

Die einzelne Sende- oder Empfangsantenne 36, 38 kann in Ausführungsformen physikalisch aus einer Multiband-Antenne, mehreren schmalbandigen Antennen oder einer abstimmbaren schmalbandigen Antenne bestehen. In jedem Fall wird ein Teil der gesamten Anforderungen an Filterung und Isolation als Designvorgabe und Anforderung auf die Antennen 36, 38 des Antennenteils 3 verlagert.

Durch die Verlagerung eines Teils der erforderlichen Filterung sowie TX/RX-Trennung werden die Anforderungen an die nachfolgenden Signalverarbeitungspfade und deren Komponenten gesenkt. Damit wird auch ein Einsatz durchstimmbarer Elemente gerade bei den Filterbänken TBP bei gesenkten Performance-Anforderungen möglich. Damit sinkt die Einfügedämpfung für die durchstimmbaren Filter deutlich.

Der Sendezweig besteht aus hier maximal einem Leistungsverstärker 12 pro Sendeband, der über ein Anpassungsnetzwerk 13 an die Antenne 38 anschließt. Auch diese Vereinfachung im Aufbau ist durch die Senkung der Einfügedämpfung der verwendeten Komponenten ermöglicht worden. In einem Leistungsverstärkermodul ist die Tiefpassfunktion integriert, die zur Unterdrückung der Oberwellen der Ausgangssendefrequenz notwendig ist, um den jeweiligen Standard zu erfüllen. Mittels einer geeigneten Schaltungsanordnung wird das Sendesignal innerhalb des Sendepfades 8 geroutet, je nachdem ob es ein Vollduplex-Standard ist oder nicht. Für einen Nicht- Vollduplex-Standard, wie z.B. GSM, benötigt, wird das Sendesignal über Schalter zur Antenne geschaltet, welche die benötigte Transmitter- Receiver- bzw. TX-RX-Isolation erfüllt. Bei Vollduplex-Standards, wie z.B. UMTS FDD oder CDMA2000, wird das Sendesignal auf einen abstimmbaren HF-Filter geschaltet und danach erst auf die Antenne geroutet, da man eine Isolation zwischen TX und RX benötigt.

Ein Vorteil der vorgeschlagenen gegenüber anderen abstimmbaren Architekturen besteht darin, dass beim Betrieb von Nicht-Vollduplex-Standards im Sendefall die abstimmbaren HF- Sendefilter durch Schalter "by-gepaßt" und damit umgangen wird, so dass die Einfügeverluste für diese Standards nicht unnötigerweise erhöht werden. Es wird nur eine vorteilhafterweise bereits im Leistungsverstärker 12 integrierte Tiefpassfilterung benötigt, jedoch keine Bandpassfilterung. Die abstimmbaren Filter TBP brauchen für diesen Fall also nicht angesteuert zu werden, so dass der Controlling-Aufwand und Leistungsverbrauch, z.B. durch Controller, Charge-Pump, etc, im Sendefall reduziert wird.

Vollduplex-Standards wie z.B. UMTS FDD, CDMA2000 haben mit ca. 24 bis 27 dBm eine geringere Ausgangsleistung als Nicht-Vollduplex-Standards, wie z.B. GSM mit ca. 33dBm, so dass die Anforderungen an die abstimmbaren Filter bezüglich Leistungsverträglichkeit reduziert werden können. Des weiteren können die Anforderungen bezüglich Intermodulations-Verzerrungs-Performance bzw. Intercept-Punkt dritter Ordnung IP3, die vor allem bei dem Vollduplex-Standards auftreten, aufgrund der getrennten Sende- und Empfangsantennen 36, 38 reduziert werden.

Im Empfangspfad 6 können die abstimmbaren Filter für geringere Blockerleistungen ausgelegt werden, da der größte vorherrschende Blocker, das Sendesignal im Vollduplex-Fall insbesondere bei UMTS FDD, durch die zusätzliche Antennenisolation in der Leistung reduziert wird. Der Empfangspfad 6 weist nur eine Systemband-Filterung und nachfolgende Filterungen in Abhängigkeit eines jeweiligen Standards auf. Damit kommt der Empfangspfad 6 in der vorliegenden Ausführungsform ohne Schalter aus, was ein wesentlicher Beitrag zur Optimierung der Einfügedämpfung ist.

Wie vorstehend erwähnt, so kann die Empfängerkette physikalisch eine Multiband-Antenne, mehreren schmalbandige Antennen oder eine abstimmbare schmalbandige Antenne umfassen. Danach werden die Empfangssignale nach Ausfilterung eines Systembandes an abstimmbare HF-Filter TBP geführt. Dies kann durch Diplexer oder Schalter realisiert werden. Die Schalter können aus pin-Dioden, Transistor- oder RF-Mikroelektro-mechanische Systeme- bzw. MEMS-Schalter realisiert werden. Eine Auswahl wird getroffen, je nachdem welche Standards empfangen werden sollen und vor allem welche Standards gleichzeitig zu verarbeiten, siehe Monitoring im non-compressed Mode. Die abstimmbaren HF-Empfangsfilter TBP haben unter anderem die Funktion der Tx/Rx- Isolation in Sendeband und der Blocker- Unterdrückung.

Auch die abstimmbaren HF-Filter können auf verschiedenen Ansätze beruhen. Eine der Möglichkeiten abstimmbare Filter zu realisieren ist es frequenzfest eingestellte bzw. "fixe" Filter oder Filter-Resonatoren mit verstellbaren Kapazitäten zu kombinieren. Diese Anordnung realisiert über eine Verstimmung der Resonanzfrequenz eine Verstellbarkeit des Filters. Die verstellbaren Kapazitäten können z.B. aus ferroelektrischen oder paraelektrischen Materialien aufgebaut sein, wie z.B. aus Barium Strontium Titanat, kurz BST.

In dem vorstehend beschriebenen Block sind also mehrere Antennen für Senden und Empfangen mit entsprechenden Pfaden 6,8 als Hochfrequenz-Frontends vorgesehen. Die Antennen 38, 36 mit den zugeordneten Hochfrequenz-Frontends HF werden je nach erforderlicher Bandbreite und Trägerfrequenz eingestellt, ausgewählt und aktiviert. Es steht damit eine Reihe von parallel angeordneten HF-Pfaden für den Sende- und Empfangsbetrieb zur Verfügung, die adaptierbar ausgebildet sind. Durch den Einsatz abstimmbarer Filter wird die Anzahl der HF-Pfade gesenkt, so dass die Anzahl der Pfade nicht linear über der Anzahl abzudeckender Standards anwächst.

In einem an die Schnittstelle 5 anschließenden und nicht weiter dargestellten Block werden interne Verknüpfungen, Demultiplexer- und Multiplexer-Einheiten sowie eine gesamte Signalverarbeitung im Basisband zusammengefasst. Die vorstehend genannten Verarbeitungsverfahren werden in diesem Beispiel dann rein durch Software definiert und auch in Form von Software ausgeführt. Dadurch wird ein einheitlicher Gesamtaufbau der Vorrichtung 1 vorgegeben, der sehr flexibel und schnell an eine jeweilige Anforderung eingestellt werden kann. Eine jeweilige Adaption des beschriebenen Systems greift zur Einstellung von Bandbreite und Trägerfrequenz auf die Hochfrequenz-Bauelemente der in der Figur dargestellten Architektur zu und steuert entsprechende Elemente in dem nicht dargestellten Nachverarbeitungsblock an. Ferner ist eine beschriebene Vorrichtung 1 auch während des Betriebs durch eine Erneuerung und/oder Erweiterung ihrer Betriebssoftware an neue Anforderungen anpassbar.

Eine anhand der vorstehend als Beispiel für eine erfindungsgemäße Architektur beschriebene Vorrichtung für eine Sende- und Empfangs-Einrichtung realisiert ein breitbandiges bzw. multiband-fähiges und abstimmbares Senden und Empfangen. Die Sende- und Empfangseinrichtung besteht dazu aus zwei separaten Sende- und Empfangsantennen bzw. Antennensystemen. Das Grundrauschen im Empfangsband wird gedämpft, um nicht den Empfang durch zusätzliches Rauschen zu stören. Die Anforderungen an die Filter bezüglich Tx/Rxlsolation werden durch zusätzliche Isolation an den getrennten Tx/Rx-Antennen soweit reduziert, dass auch ein Einsatz von durchstimmbaren Filtern bei stark verbesserter Performance möglich ist. Damit ist ein flexibles HF-Frontend und eine entsprechende Sende- und/oder Empfangsvorrichtung vorgestellt worden, die als allgemein Plattform mit flexibler Anpassung genutzt werden kann. Die präsentierte Architektur ermöglicht die Realisierung eines "World-Phones", der alle regionalen Standardvarianten unterstützt.

## Patentansprüche

1. Sende- und/oder Empfangseinrichtung (1) mit einer Schaltungsanordnung (2) zur Verbindung einer Antennenanordnung (3) mit einer Verstärkeranordnung (4) und einer nachfolgenden Signalverarbeitung und/oder Signalaufbereitung,
mit einem Empfangspfad (6), der eine Empfangsfiltereinrichtung zum Selektieren von Empfangssignalen aufweist, und
einem Sendepfad (8), der eine Sendefiltereinrichtung zur Dämpfung von Sendesignalen aufweist,
die jeweils mit der Antennenanordnung (3) über eine Leitung (10,11) verbunden sind,
**dadurch gekennzeichnet,**
**dass** in der Antennenanordnung (3) getrennte Antennen (36, 38) für das Senden und das Empfangen vorgesehen sind, wobei ein Teil der gesamten Anforderungen an Filterung und Isolation als Designvorgabe und Anforderung auf die Antennen (36, 38) des Antennenteils (3) verlagert ist, und die Anforderungen an die nachfolgenden Signalverarbeitungspfade (6, 8) und deren Komponenten gesenkt sind.

2. Vorrichtung nach Anspruch 1, **dadurch gekennzeichnet, dass** ein Antennenteil (3) hinsichtlich seiner Charakteristik unter Berücksichtigung der jeweils zu unterstützenden Standards entworfen und/oder designed ist.

3. Vorrichtung nach einem der beiden vorangehenden Ansprüche,
**dadurch gekennzeichnet, dass** für die Filter (TBP) in den Signalverarbeitungspfaden (6, 8) der Schaltungsanordnung (2) durchstimmbare Elemente vorgesehen sind.

4. Vorrichtung nach einem der vorangehenden Ansprüche,
**dadurch gekennzeichnet, dass** die Signalverarbeitungspfade (6, 8) der Schaltungsanordnung (2) voneinander vollständig getrennt sind.

5. Vorrichtung nach einem der vorangehenden Ansprüche,
**dadurch gekennzeichnet, dass** eine an die Schaltungsanordnung (2) anschließende Signalverarbeitung per Software definiert ist.

6. Kommunikationsendgerät
**dadurch gekennzeichnet,**
**dass** es mit einer Schaltungsanordnung nach einem der vorhergehenden Ansprüche ausgestattet ist.
